# EUROPEAN PATENT SPECIFICATION

(11) **EP 2 999 588 B1**
(45) Date of publication and mention of the grant of the patent: **17.05.2023**
(21) Application number: 14725731.5
(22) Date of filing: 23.05.2014
(51) Int. Cl.: B32B 5/18, B32B 15/04, B32B 15/08, B32B 15/082, B32B 15/09, B32B 15/095, B32B 15/18, B32B 15/20, B32B 27/30, B32B 27/36, B32B 27/40, E04C 2/296

(54) **THREE-DIMENSIONAL STRUCTURAL MEMBER FORMED BY A SANDWICH STRUCTURE WITH FOAM CORE BETWEEN METALLIC LAYERS**
DREIDIMENSIONALES BAUTEIL AUS EINER SANDWICH-STRUKTUR MIT EINEM SCHAUMSTOFFKERN ZWISCHEN METALLISCHEN SCHICHTEN
ÉLÉMENT STRUCTUREL TRIDIMENSIONNEL COMPOSÉE D'UNE STRUCTURE EN SANDWICH AVEC UN NOYAU EN MOUSSE ENTRE DES COUCHES MÉTALLIQUES

(30) Priority: 23.05.2013 GB 201309323
(43) Date of publication of application: 30.03.2016
(73) Proprietor: 4A Manufacturing GmbH, 8772 Traboch (AT)
(72) Inventor: PICHLER, Michael, A-8723 Kobenz (AT); HAFELLNER, Reinhard, A-8724 Spielberg (AT)
(74) Representative: Dilg, Haeusler, Schindelmann Patentanwaltsgesellschaft mbH
(86) International application number: PCT/EP2014/060713
(87) International publication number: WO 2014/187982

(56) References cited:
- EP-A1- 2 562 324
- EP-A2- 2 500 123
- WO-A2-2005/042239
- DE-A1- 10 257 396
- DE-A1- 10 340 541
- DE-A1-102006 056 612

## Description

The invention relates to a three-dimensionally formed structural member.

Moreover, the invention relates to an apparatus for producing a three-dimensionally formed structural member.

Furthermore, the invention relates to a method of producing a three-dimensionally formed structural member.

Automotive construction uses steel, for example for the bodyworks and other three dimensionally formed structural members, because it has excellent mechanical properties. However, steel is relatively heavy. An alternative used in place of steel is aluminum, which is lighter, but is more expensive. It has further been proposed to use composite materials such as metal-plastic-metal sandwich structures. However, also such conventional sandwich structures suffer from a relatively high weight.

DE 10257396 discloses composite elements which comprise 0.05-2 mm metal, 0.1-2 mm polyisocyanate polyaddition products with DIN EN ISO 6721 storage modulus 60-350 MPa at -20 to +80°C and/or at least 1.7 MPa at +160 to +220 °C, and 0.05-2 mm metal. DE 10257396 further discloses the production of body parts for automobiles, heavy goods vehicles or aircraft by forming these layers in a press.

DE 10340541 discloses composite components with the following layered structure: (i) between 0.05 mm and 2 mm metal; (ii) between 0.1 mm and 2 mm polyisocyanate-polyaddition products, which are present in a support; (iii) between 0.05 mm and 2 mm metal.

WO 2005/042 2.39 A2 discloses a composite element with a layer structure comprising two outer layers made of metal, plastic or wood, having a thickness in a range between 2 mm and 20 mm. Between the two outer layers, an intermediate layer of polyisocyanate polyaddition products is arranged. The intermediate layer has a density in a range between 900 kg/m³ and 1200 kg/m³.

EP 2 562 324 A1 discloses a composite plate for frame enlargements of windows and doors. The composite plate comprises a core made of PET foam with a thickness in a range between 10 mm and 100 mm. The core is sandwiched between a first cover layer and a second cover layer which may be made of aluminium and which are adhered to the core by a hot melt adhesive.

EP 2 500 123 A2 discloses a laminate having improved thermal and sound insulating properties. The laminate comprises a support sheet made of a high density foam with a thickness in a range between 20 mm and 70 mm. The support sheet is covered with a thin porcelain sheet having a thickness in a range between 2 mm and 7 mm.

DE 10 2006 056 612 A1 discloses a composite material having a sandwich structure. The composite material comprises a core layer made of plastic foam and at least one tensile stiff layer made of metal foil which is adhered to the core layer by an adhesive layer. The thickness of the core layer is in a range between 0,5 mm and 2 mm. The thickness of the tensile stiff layer together with the adhesive layer is maximum 50 µm.

However, it is still difficult to provide a three-dimensionally shaped structural member which is robust, light-weight and freely formable in a desired shape.

It is an object of the invention to provide a three-dimensionally shaped structural member which is robust, light-weight and freely formable in a desired shape.

In order to achieve the object defined above, a three-dimensionally formed structural member, an apparatus for producing a three-dimensionally formed structural member, and a method of producing a three-dimensionally formed structural member according to the independent claims are provided.

According to an exemplary embodiment of the invention, a three-dimensionally formed (particularly a three-dimensionally curved, i.e. non-planar) structural member is provided which comprises a first cover layer made of a metallic material (which may be made of one or more metals), a second cover layer made of a metallic material (which may be made of one or more metals), and a core layer made partially or entirely of a foam material (particularly a solid state foam material) and being arranged between the first cover layer and the second cover layer. The core layer has a density in a range between 35 kg/m3 and 750 kg/m3, wherein the structural member temperature-resistant at a temperature of 180°C. The structural member further comprises an adhesive material adhering the foam material to the first cover layer and/or adhering the foam material to the second cover layer, wherein the adhesive material has a melting point above 180°C.

According to another exemplary embodiment of the invention, an apparatus for producing a three-dimensionally formed (or shaped) structural member is provided, wherein the apparatus comprises a first layer supply unit configured for supplying a first cover layer made of a metallic material, a second layer supply unit configured for supplying a second cover layer made of a metallic material, a foam supply unit configured for supplying a material (such as a foam material or a foam precursor material) between the first cover layer and the second cover layer which forms a core layer made partially or entirely of foam material and being connected (directly, i.e. physically connected, or indirectly, i.e. via at least one intermediate structure such as an adhesive layer) between the first cover layer and the second cover layer to form a cohesive (for instance integral) layer sequence, and a forming unit (particularly a shaping unit or a plastically deforming unit) configured for three-dimensionally forming (particularly shaping or plastically deforming) the resulting (particularly planar) layer sequence (i.e. the layer sequence obtained by interposing the core layer between the cover layers and directly or indirectly connecting the core layer with the cover layers) to thereby form the structural member (being transformed or reshaped as compared to the planar layer sequence) from materials being temperature-resistant at a temperature of 180°C. The apparatus further comprises an adhesive material supply unit having a third source roll on which a layer of hot melt adhesive as a basis for a first adhesive layer is rolled on and being unrollable configured for supplying adhesive material between the foam material and the first cover layer and between the foam material and the second cover layer to thereby adhere the foam material to the first cover layer and adhere the foam material to the second cover layer, wherein the adhesive material has a melting point above 180°C.

According to still another exemplary embodiment of the invention, a method of producing a three-dimensionally formed structural member is provided, wherein the method comprises providing a first cover layer made of a metallic material, providing a second cover layer made of a metallic material, arranging a core layer made partially or entirely of a foam material between the first cover layer and the second cover layer to thereby form a cohesive (or continuous) layer sequence, and three-dimensionally forming the resulting (particularly previously planar) layer sequence (in which all layers may be arranged parallel to one another) to thereby form the structural member. The structural member is formed to be temperature-resistant at a temperature of 180°C. The foam material is adhered to the first cover layer and the foam material is adhered to the second cover layer by adhesive material, wherein the adhesive material has a melting point above 180°C.

In the context of this application, the term "three dimensionally formed structural member" (in contrast to a planar structure) may particularly denote members which are curved in all three spatial dimensions and/or have structural features in all three spatial dimensions, thereby forming substantially non-planar steric geometries. These structural members are realized as sandwich
components made of multiple bonded layers or sheets. In such three dimensionally formed structural members, at least a part of the at least three layers or sheets may have a common curvature, i.e. these sheets may still extend section-wise parallel to one another. More particularly, such three dimensionally formed structural members may have a constant thickness along their entire extension, wherein technically unavoidable tolerances are of course possible.

In the context of this application, the term "cover layer" may particularly denote a layer or sheet covering the core layer to shield the latter with regard to an environment, but not necessarily forming a surface layer.

In the context of this application, the term "core layer" may particularly denote an embedded layer having a central position within the layer sequence forming the three-dimensional formed structural member. Thus, the core layer will not be a surface layer (with exception of the lateral edge of the layer stack at which the core layer may extend up to a surface) but will be always covered on both of its main surfaces by a respective one of the cover layers. The skilled person will understand that it is not excluded in one embodiment, that there are one or more additional layers between the core layer and the cover layers. However, in other embodiments, the core layer may directly contact the cover layers without any additional layer in between.

In the context of this application, the term "rigid" may particularly denote that the respective metallic layer may be full solid body which is capable of withstanding mechanical forces or loads without losing its structural shape. Such a rigidity may be achieved by forming the cover layers from metals which are rigid materials.

In the context of this application, the term "foam" may particularly de-note a substance that is formed by trapping pockets of gas in a solid matrix. Thus, the foam layer may be layer in the solid state, however having gas inclusions therein. A division of solid foams, from which the foam layer is preferably made, is into closed-cell foams and open-cell foams. In a closed-cell foam, the gas forms discrete pockets, each completely surrounded by the solid material. In an open-cell foam, the gas pockets connect with each other. The foam layer contributes to the lightweight characteristics of the three dimen-sionally formed structural member and may at the same time also provide a contribution concerning mechanical stability. The solid foam may have gas inclusions which may amount to at least 30%, particularly at least 70%, more particularly at least 85%, of the entire volume of the core layer.

According to an exemplary embodiment, a sandwich layer stack is provided formed by two mechanically robust metallic cover layers and the lightweight solid foam material (such as plastic hard foam) therebetween. Such a sandwich layer sequence is both mechanically stable and lightweight, as well as cheap in manufacture. Furthermore, which is of utmost importance, such a sandwich layer sequence has turned out to be properly re-formable or re-shapeable by plastic deformation, even without heating, thanks to the material properties of the metallic cover layers. Thus, there is almost no limitation of re-forming such a planar sandwich layer sequence into a structural member of any desired steric configuration.

In the following, further exemplary embodiments of the three-dimensionally formed structural member, the apparatus for producing a three-dimensionally formed structural member, and the method of producing a three-dimensionally formed structural member will be explained.

According to the invention, it is of particular advantage when the structural member is formed to be temperature-resistant at a temperature of at least 180°C. Such a material selection allows the structural member to withstand in particular a varnishing procedure which, in modern applications, is frequently performed at temperatures of about 180°C. Moreover, the capability of the structural member to withstand temperatures of 180°C is also highly advantageous when the structural member is configured as an electromechanical component, since modern electromechanical components operate at higher and higher power levels at which a significant amount of heat may be dissipated. Furthermore, such electromechanical components may be placed close to other electronic components also generating heat. Thus, it is advantageous that the materials of the structural member are selected temperature resistant up to at least 180°C.

In an embodiment, one or both of the metallic cover layers may be made of an alloy, particularly an alloy being sufficiently soft. For instance, a steel type or an aluminum type suitable for cold forming may be used. The implemented metallic material should not have a pronounced elastic limit or yield strength. The implemented metallic material should have a sufficiently high elongation at fracture, particularly larger than 20%, more particularly larger than 30%.

Steel materials meeting the above requirements are soft steels for cold forming according to DIN EN 10130 (DC01, DC03, DC04, DC05, DC06, DC07). Such steel materials may be preferably zinc-coated. It is also possible to use steel manufactured by cold rolling according to DIN EN 10202 (TS230, TS245, TS260, TS275, TS290). Stainless steel being appropriate for deep drawing may be used as well (for instance 1.4301).

It is also possible to implement forgeable aluminum alloy according to DIN EN 573 (alloys of the 2000 series, alloys of the 5000 series, alloys of the 6000 series, AlMgSi 0.5, AlMgSi 1, Al 99.5).

In an embodiment, the core layer consists exclusively of foam material, particularly solid foam material. Hence, it is sufficient that the core layer is only made of a single material, i.e. the foam. Thus, no carrier structure (such as a solid bulk or full body) for carrying or supporting the foam material is necessary in addition to the cover layers. This has significant advantages in terms of the capability of re-forming the sandwich layer stack for changing and adjusting its three-dimensional shape or appearance as well as in terms of the lightweight properties of the sandwich layer stack.

In an embodiment, at least one of the first metallic cover layer and the second metallic cover layer is made of aluminum or steel. Steel has the particular advantage of having a high mechanical robustness while also being cheap. Aluminum has the significant advantage to be very light in weight so that the lightweight property of the entire sandwich layer stack is further promoted by the selection of aluminum. Both steel and aluminum show a high stiffness and can be easily re-formed which renders them particularly appropriate for struc-tural members according to embodiments of the invention.

In an embodiment, the core layer is made of a plastic foam, i.e. a foam of a plastic material. Experiments of the present inventors have shown that a broad variety of plastic foam materials are suitable for being bonded between two metal cover layers.

Specifically, the plastic foam may be polystyrene foam. Polystyrene foam is very cheap, highly appropriate for reforming and has a small density. Particularly, EPS Foam (Expanded Polystyrene) or expanded blends of Polystyrene offers a broad range of physical properties to meet the challenges of core layers for 3D structural members. These properties, in combination with appropriate engineering design considerations, provide the design flexibility required to create truly lightweight and cost effective bridging of two cover layers. In an embodiment, the polystyrene foam may be provided with one or more additives to adjust the desired mechanical properties. Expanded Polystyrene (EPS) is a versatile, lightweight, rigid, plastic foam insulation material which may be produced from solid beads of polystyrene, wherein the end product may made up of fine spherical cells that comprise a large amount of air, for instance 90 to 98 volume % air.

Specifically, the plastic foam may be made of one or more thermoplastic polyesters, particularly polyethylene terephthalate (PET) foam. PET has the particular advantage of being capable of withstanding high temperatures of 180°C and more, thereby allowing varnishing procedures to be carried out after finishing formation or re-shaping of the three-dimensional structural member. This is particularly advantageous in terms of forming automotive components in which varnishing of external surfaces of certain structural members is advantageous.

Specifically, the plastic foam may be polymethacrylimide (PMI) foam. PMI is also highly temperature resistant so as to be compatible with varnishing procedures post manufacture of the 3D structural member, as just described.

Specifically, the plastic foam may be polyisocyanate based foam. Polyurethane is also highly temperature resistant and Polyurethane has additionally a very good chemical resistance. According to the present invention, the core layer has a density in a range between approximately 35 kg/m³ and approximately 750 kg/m³, particularly in a range between approximately 75 kg/m³ and 200 kg/m³. The given ranges are particularly appropriate in view of the following technical considerations. If the density becomes too small, the quality of the manufactured sandwich structure is deteriorated and the robustness of the structural member suffers. If however the density becomes too large, the structural member becomes too heavy and too expensive.

According to the present invention, the structural member comprises adhesive material adhering the foam material to the first cover layer and/or adhering the foam material to the second cover layer. Correspondingly, the manufacturing apparatus may comprise an adhesive material supply unit configured for supplying adhesive material between the foam material and the first cover layer and/or between the foam material and the second cover layer to thereby adhere the foam material to the first cover layer and/or to adhere the foam material to the second cover layer. Adhering the foam material to at least one of the cover layers further strengthens the mechanical robustness of the structural member.

The adhesive material is a hot melt glue with a melting point above 180 °C. Hot melt adhesive or hot glue is a form of (for instance thermoplastic) adhesive that is tacky when hot, and solidifies rapidly upon cooling. Hot melt adhesives can be applied by dipping or spraying, as a continuous layer or in the form of particles such as granulates. Hot melt glue has the advantages of a thermal durability and a structural flexibility which is a significant advantage during the reforming procedure.

In an embodiment, the adhesive material comprises a first adhesive layer between the first cover layer and the core layer and/or comprises a second adhesive layer between the second cover layer and the core layer. Thus, ready-made adhesive layers can be sandwiched between the foam core layer and the two cover layers. This has the advantage that a continuous adhering performance can be obtained and that the procedure can be applied easily also on an industrial scale. Alternatively, the adhesive material can be supplied between the material of the foam layer and the material of the cover layers as granulate, powder or even in a liquid form.

Thus, the adhesive material is solid at operation temperatures of structural members (i.e. solid at maximum temperatures of normal use of the structural member) which are usually below 70°C. At the same time, already moderate heating of the adhesive material allows to glue it between the foam material and the cover layers.

According to the present invention, the adhesive material has a melting point above 180°C, particularly above approximately 200°C, more particularly above approximately 250°C. Thus, the adhesive material is solid even at temperatures at which varnish is usually applied. Thus, varnish process compatibility and mechanical robustness of the composite material may be combined.

Examples for usable hot melt adhesives are polyethylene (PE-), polypropylene (PP-), Copolyester-, Copolyamide- or polyurethane (PU-)based materials.

In an embodiment, the thickness of the structural member is in a range between approximately 0.2 mm and approximately 10 mm, particularly in a range between approximately 0.5 mm and approximately 8 mm. For instance, the entire thickness over the overall extension of the structural member may be between 1 mm and 6 mm. If the thickness becomes much smaller, the mechanical robustness of the structural member may be insufficient for automotive applications or the like. If the thickness becomes too large, it becomes too difficult to re-form the sandwich layer stack into a three dimensionally formed structural member because the internal strain of the connected layers becomes too large. The given ranges have turned out as a proper tradeoff between these technical considerations.

In an embodiment, the thickness of at least one of the first cover layer and the second cover layer is in a range between approximately 0.01 mm and approximately 1.5 mm, particularly in a range between approximately 0.08 mm and approximately 0.8 mm. Thus, relatively small thicknesses of the cover layers which are usually made of metallic material are sufficient to provide a sufficient mechanical stability. However, the thickness of the metallic layers may be kept so small that the entire density of the sandwich composite structure is sufficiently small. The structural member may therefore be formed by lightweight construction.

In an embodiment, the thickness of the core layer of solid foam is in a range between approximately 0.15 mm and approximately 8 mm. For many applications, it is advantageous that the core layer has a higher thickness than the cover layers.

In an embodiment, the structural member comprises a varnish layer on top of at least one of the first cover layer and the second cover layer. The option of varnishing surface layers is important for structural members used as cover panels for automotive applications or the like. However, varnishing procedures usually involve heating to temperatures of about 180°C, typically for a duration of 30 minutes. The re-formable sandwich layer sequence according to exemplary embodiments of the invention meets the requirements of such varnishing procedures.

In an embodiment, at least one of the first cover layer and the second cover layer is a surface layer of the three-dimensionally shaped structural member. The term "surface layer" may particularly denote the uppermost or lowermost surface of the layer sequence or structural member which is directly exposed to the environment such as the atmosphere.

In an embodiment, at least one of the first cover layer and the second cover layer is a stiff layer. Particularly, it may have a metallic stiffness, i.e. stiffness properties of metals. The corresponding stiff layer may be incapable to be bent or to be flexibly or elastically deformed in normal use.

In an embodiment, the structural member is configured as one of the group consisting of an automotive structural member, an aircraft structural member, a rail vehicle structural member and a ship structural member. It may hence be a part of a cover panel or an encasement or a reinforcement element of an automobile, an aircraft or a train. However, other applications are possible as well.

In an embodiment, the forming is performed by cold forming, particularly by deep-drawing. Cold forming may particularly denote re-forming a planar sandwich layer sequence into the three dimensionally formed structural member without the application of additional heat. Applicable cold forming techniques are pressing, squeezing, bending, drawing, and shearing. Drawing can be particularly denoted as a metalworking process which uses tensile forces to stretch metal. Deep drawing may be a sheet re-forming process in which a sheet formed by the above described sandwich structure is drawn into a forming die by the mechanical action of a punch or the like. It is thus a shape transformation process with material retention. Deep drawing may particularly result in a structural member in which the depth of the drawn part exceeds its diameter.

In an embodiment, the manufacturing method further comprises pressing the core layer (and optionally adhesive material for gluing the core layer to one or both of the cover layers) between the first cover layer and the second cover layer by heatable (for instance heated by a temperature adjustment unit) pressing bodies, particularly rolls or rollers or drums (which may be moved longitudinally with respect to the layers and/or which may be rotated). In this context, the individual layers (or precursors thereof, for instance a granulate later forming such a layer) are supplied to the rolls or similar pressing bodies which are at an elevated temperature as compared to ambient temperature. A combination of the mechanical pressing force and the bonding effect of the thermal energy then converts the individual layers into an inseparable sandwich layer sequence.

In an embodiment, the foam material is supplied to the pressing bodies as readily cut foam layer. For example, the foam may be provided as three-dimensional block. By using a cutting tool such as a knife or the like, the block can be cut into individual layers or slices of foam material (for instance having a thickness in a range between 1 mm and 8mm, where and a main surface area of the foam layer may for instance be in the range between 1 dm² to 10 m²). Such a cut foam layer may then be directly interposed between the cover layers to thereby form the composite structure. This procedure may ensure that the foam layer has a continuously constant quality and remains free of voids or the like.

In an alternative embodiment, the foam material is supplied to the pressing bodies as foam layer precursor, particularly one of the group consisting of a granulate precursor, a powder precursor, and a liquid precursor, which is converted into a foam layer by the heated pressing bodies. In such an embodiment, the foam or the foam layer is only formed while the heated pressing bodies impact the precursor material. This embodiment is particularly appropriate for manufacture of structural members on an industrial scale because the precursor material (such as a granulate) can be supplied continuously from a large container or via a conveyor belt.

In an embodiment, the method may further comprises adhering the foam material to the first cover layer and/or adhering the foam material to the second cover layer by adhesive material. Although the use of adhesive material is optional, it allows to form a particularly robust structural member because the adhesive strength is increased by the separate provision of adhesive material as a bonding agent.

In an embodiment, the adhesive material is supplied to the pressing bodies as readily formed adhesive layer. Such a continuous adhesive layer allows providing an adhesive force with a continuously constant quality and free of voids or the like.

In an embodiment, the adhesive material is supplied to the pressing bodies as adhesive particles, particularly as adhesive powder or granulate, which are converted into the adhesive layer by the heated pressing bodies. In such an embodiment, the adhesive layer is only formed during the actual layer connection procedure. This embodiment is particularly appropriate for manufacture of the structural members on an industrial scale because the adhesive substance can be supplied continuously from a large container or via a conveyor belt.

In an embodiment, the pressing bodies are heated to a temperature in a range between approximately 100°C and approximately 250°C, particularly in a range between approximately 130°C and approximately 180°C. It has turned out that these temperatures are appropriate for efficiently promoting the bonding process while at the same time keeping the thermal impact on the sandwich layer sequence as small as possible.

In an embodiment, at least one of the first cover layer and the second cover layer is provided by rolling it up (i.e. by unrolling it) from a supply roll or source roll. The cover layers which are preferably made from thin metal sheets can be provided with such a small thickness that they can be rolled up on the roll. Thus, a continuous procedure may be executed which allows to manufacture the sandwich layer sequence rapidly and with low costs.

In an embodiment, the method comprises applying a varnish layer on top of at least one of the first cover layer and the second cover layer. By a proper selection of the materials of the cover layers and the core layer (and optionally of adhesive material in between), compliance with the high temperature requirements of varnishing an outer surface of the three dimensionally formed structural member can be achieved.

In an embodiment, the varnish layer is applied to an exposed surface of the readily re-shaped sandwich layer sequence at a temperature in the range between approximately 120°C and approximately 250°C, particularly in the range between approximately 170°C and approximately 200°C. A typical temperature of such a varnishing procedure involves the application of 180°C for 30 minutes.

Within the context of this application, three-dimensionally formed structural members are disclosed.

The invention is apparent from the examples of embodiment to be described hereinafter and is explained with reference to these examples of embodiment.

The invention will be described in more detail hereinafter with reference to examples of embodiment but to which the invention is not limited.
Figure 1 illustrates a cross-sectional view of a three dimensionally formed structural member according to an exemplary embodiment of the invention.
Figure 2 illustrates a first part of an apparatus of manufacturing a three dimensionally formed structural member according to an exemplary embodiment of the invention in which an integral planar sandwich layer stack is formed.
Figure 3 illustrates a second part of an apparatus of manufacturing a three dimensionally formed structural member according to an exemplary embodiment of the invention in which the readily formed integral planar sandwich layer stack is re-formed or re-shaped by deep drawing.
Figure 4 shows the composition of a sandwich layer stack as a semifinished product for a three dimensionally formed structural member according to an exemplary embodiment of the invention.
Figure 5 illustrates a deep drawing mold for re-forming a flat two-dimensional sandwich layer stack into a three dimensionally formed structural member according to an exemplary embodiment of the invention.
Figure 6 illustrates a structural member according to an exemplary embodiment of the invention formed by the deep drawing mold of Figure 5.
Figure 7 and Figure 8 schematically show parts of apparatuses for manufacturing structural members according to exemplary embodiments of the invention.
Figure 9 shows a car as well as two three dimensionally formed structural members thereof manufactured according to exemplary embodiments of the invention.
Figure 10 shows different three dimensionally formed structural members which can be produced according to exemplary embodiments of the invention.
Figure 11 shows a rear panel of an automobile as an example for a three-dimensionally formed structural member according to an exemplary embodiment of the invention.
Figure 12 shows a diagram illustrating advantages in terms of weight and manufacturing effort of structural members according to exemplary embodiments as compared to conventional technologies.

The illustrations in the drawings are schematic. In different drawings, similar or identical elements are provided with the same reference signs.

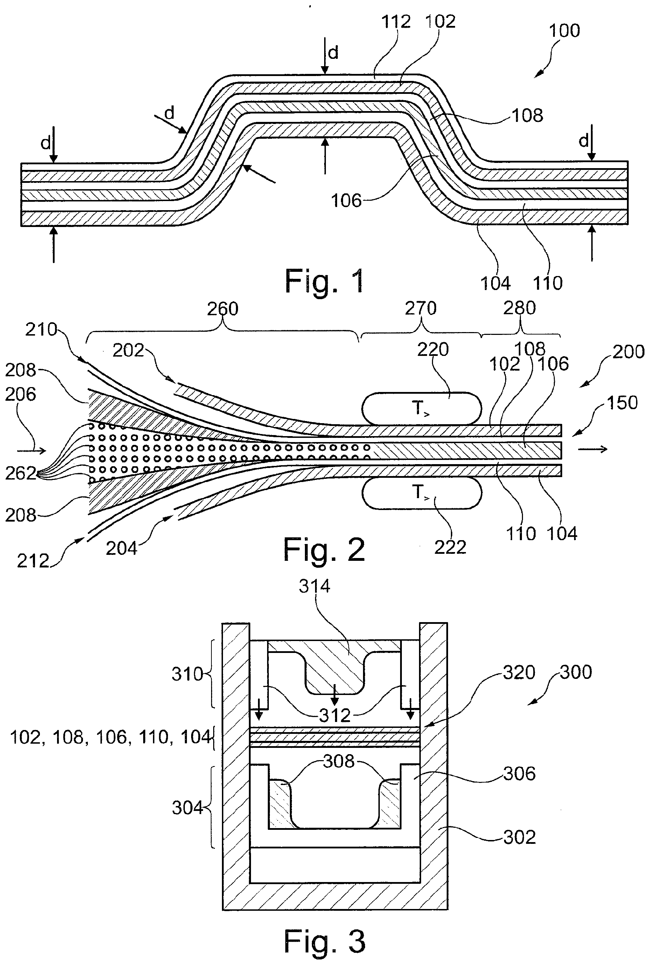

**Figure 1** illustrates a cross-sectional view of a three dimensionally formed structural member 100 according to an exemplary embodiment of the invention.

The three-dimensionally formed structural member 100 comprising a first cover layer 102 made of a 0,1 mm thick steel sheet as a rigid material, a second cover layer 104 made of a 0,1 mm thick steel sheet as a rigid material and forming a lower surface layer, and a core layer 106 made of a 6 mm thick solid polystyrene foam material having a density of 150 kg/m³ and being arranged between the first cover layer 102 and the second cover layer 104. Furthermore, a first adhesive layer 108 of hot melt adhesive is sandwiched between the first cover layer 102 and the core layer 106 to thereby adhere the first cover layer 102 to the core layer 106. Correspondingly, a second adhesive layer 110 of hot melt adhesive is sandwiched between the second cover layer 104 and the core layer 106 to thereby adhere the second cover layer 104 to the core layer 106. On top of the first cover layer 102, a varnish layer 112 is applied to form a second surface layer of the integral three dimensionally re-formed layer sequence 112, 102, 108, 106, 110, 104.

To arrive at the three-dimensionally formed structural member 100, the originally planar layer sequence 102, 108, 106, 110, 104 has been sterically re-shaped by a deep drawing tool or the like to thereby form the stereoscopic or three dimensionally formed structural member 100. Advantageously, varnish layer 112 is applied directly onto the first cover layer 102 after the re-forming procedure to ensure that the varnish layer 112 is not negatively influenced by the re-forming process.

The metallic cover layers 102, 104 are basically undeformable (under normal conditions) and rigid and provide the structural member 100 with mechanical stability. On the other hand, the core layer 106 made of the low density solid state polystyrene foam (for example 150 kg/m³) provides the structural member 100 with the required thickness and volume and at the same time keeps the structural member 100 light in weight. The material of the core layer 106 is furthermore cheap and, in combination with the cover layers 102, 104, has appropriate properties to allow basically all kinds of desired structural re-forming of the semifinished product in form of the previously planar layer sequence 102, 108, 106, 110, 104. At the same time, a high degree of stiffness as well as pronounced damping properties can be obtained with the structural member 100. The three-dimensional shape of the structural member 100 can be adjusted freely to correspond to the technical function of the same, for instance its use as a panel for automotive applications. As can be taken from Figure 1, the re-forming procedure basically keeps the overall thickness, d, of the structural member 100 relatively constant, as well as the relative thicknesses of the individual layers 102, 108, 106, 110, 104 thereof. Furthermore, the structural member 100 fulfills safety requirements, for instance for applications concerning aircraft technology and railway transportation. Moreover, the structural member 100 is also temperature-resistant over a broad range.

**Figure 2** illustrates a first part 200 of an apparatus of manufacturing a three dimensionally formed structural member 100, as the one shown in Figure 1, according to an exemplary embodiment of the invention in which integral planar sandwich layer stack 102, 108, 106, 110, 104 is formed.

As can be taken from Figure 2, the multiple components constituting the structural member 100 are supplied in various forms in an input stage 260 of the first part 200 of the manufacturing apparatus.

A first layer supply unit 202 is only shown schematically in Figure 2 and is configured for supplying a first metal sheet as the first cover layer 102. Although not shown in Figure 2, the first cover layer 102 can be unrolled from a supply roll to thereby allow for a continuous production of structural members. In view of the small thickness of the first cover layer 102 of for instance 0,1 mm the metallic sheet material can be stored in a compact way on the roll. A second layer supply unit 204 is also shown schematically in Figure 2 and is configured for supplying a second metal sheet as the second cover layer 104. Correspondingly, the second cover layer 104 can be unrolled from another supply roll to thereby allow for a continuous production of structural members. In view of the small thickness of the second cover layer 104 of for instance 0,1 mm also this metallic sheet material can be stored in a compact way on the other supply roll.

Between the first layer supply unit 202 and the second layer supply unit 204, a foam precursor supply unit is arranged to supply a granulate 262 of a foam precursor along the production line of Figure 2. More precisely, a schematically shown conveying unit 206 conveys the granulate 262 towards a tapering funnel 208. The granulate 262 is configured so that, when being interposed between the first cover layer 102 and the second cover layer 104 at an elevated temperature of for instance 120°C and at an elevated pressure of for instance several bar is converted into a continuous foam layer, i.e. foam core layer 106. Also the described supply of the granulate 262 and its conversion into a continuous foam layer is a continuous procedure which allows for the continuous production of structural members with a high yield and efficiency.

In order to additionally promote adhesion between the core layer 106 and the metallic cover layers 102, 104, two adhesive layers 108, 110 are supplied by corresponding adhesive material supply units 210, 212. Since the adhesive layers 108, 110 are made of hot melt adhesive in the present embodiments (other adhesive materials may be used as well), they can also be rolled up on a roll. The adhesive layers 108, 110 may optionally be provided with a non-adhesive foil to prevent adhesion between different portions of the respective adhesive layers 108, 110 while still being rolled up on the rolls (not shown). The first adhesive layer 108 is supplied between the first cover layer 102 and the foam material, whereas the second adhesive layer 110 is supplied between the foam material and the second cover layer 104. The provision of adhesive material is optional, but further increases the mechanical strength of the formed three-dimensional structural member 100.

The hot melt adhesive becomes sticky upon being heated to an elevated temperature T_{>} in an intermediate stage 270 downstream of the first stage 260 in a process flow. Here, the layers 102, 108, 106, 110, 104 are compressed and adhered to one another between heated rolls 220, 222 of the intermediate stage 270. The heated rolls 220, 222 fulfil several tasks at the same time. Firstly, they convert the granulate 262 into continuous foam core layer 106. Secondly, they heat the hot melt adhesive to a temperature at which it becomes sticky and adheres the adjacent layers. Thirdly, it compresses layers 102, 108, 106, 110, 104 to thereby produce a uniform integrally formed layer sequence with individual layers being basically inseparable from one another.

At an output stage 280 of the first part 200 downstream of the intermediate stage 270 in the process flow the planar layer sequence 102, 108, 106, 110, 104 is cooled down and can be further processed, for instance cut into pieces of desired shape and size, prior to supplying it to a second part 300, shown in Figure 3, of the manufacturing apparatus. At the end of the treatment by the first part 200, an integral five-layer sandwich layer stack 150 is obtained.

**Figure 3** illustrates the second part 300 of the apparatus of manufacturing a three dimensionally formed structural member 100 according to an exemplary embodiment of the invention in which the formed planar sandwich layer stack 102, 108, 106, 110, 104 is re-formed by deep drawing.

Figure 3 hence shows a deep drawing apparatus as the second part 300. A cut piece 320 of the planar layer sequence 102, 108, 106, 110, 104, as manufactured in accordance with Figure 2, is inserted into a casing 302 of the deep drawing apparatus. A first deep drawing tool 304 is arranged in the second part 300 below the piece 320. The first deep drawing tool 304 has a first holding down clamp 306 and has a first mold 308. A second deep drawing tool 310 is arranged in the second part 300 above the piece 320. The second deep drawing tool 310 has a first holding down clamp 312 and has a second mold 314.

For re-forming the piece 320 into the structural member 100, the deep drawing tools 304, 310 moved relative to one another until the holding down clamps 306, 312 together engage a lateral portion of the piece 320. Hence, the lateral portion of the piece 320 is spatially fixed by clamping before the actual re-forming procedure is carried out. Without the application of heat, the clamped piece 320 is then re-formed by deep drawing as a result of a mutual motion of the molds 308, 314 to further approach one another so that the planar piece 320 is re-formed in accordance with the cooperating surface shapes of the molds 308, 314. This procedure may be carried out at room temperature, i.e. is a cold forming or re-forming procedure.

After finishing this procedure, the re-formed piece 320 is removed from the second part 300 of the manufacturing apparatus and can then be made subject of a varnish application procedure (not shown). This involves the application of a high temperature of for instance 180°C for 30 minutes and forms the varnish layer 112 on top of the first cover layer 102. Then, the manufacture of the structural member 100 is finished.

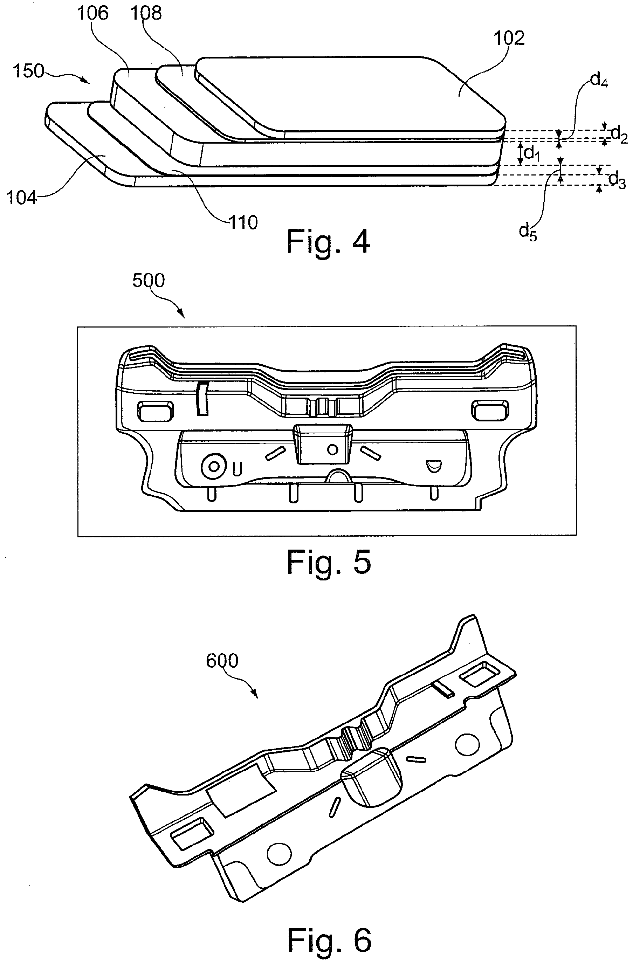

**Figure 4** shows the composition of the sandwich layer stack 150 as a precursor for three dimensionally formed structural member 100 according to an exemplary embodiment of the invention.

According to Figure 4 and more generally in any desired embodiment of the invention, the thickness d₁ of the foam core layer 106 may be larger than the thicknesses d₂, ds of the cover layers 102, 104. The thicknesses d₂, ds of the cover layers 102, 104 may, for instance, be larger than thicknesses d₄, d₅ of the optional adhesive layers 108, 110.

There is a high freedom regarding the choice of the materials for the individual layers. The cover layers 102, 104 are made from a metallic material such as steel or aluminum. The core layer 106 may be made of a plastic foam of or on the basis of EPS, polyphenyl ether (PPE), PET, PMI and/or polyurethane (PU), provided that the density of such foams is sufficiently low, preferably less than 750 kg/m³, to meet the lightweight requirements of the structural member 100. Preferably, the adhesive layers 108, 110 are made of a hot melt adhesive which may be provided in the form of foils, powder, granulate or the like.

**Figure 5** illustrates a deep drawing mold 500 for use during re-forming a sandwich layer stack 150 into a three dimensionally formed structural member 100 according to an exemplary embodiment of the invention. **Figure 6** illustrates a structural member 100 according to an exemplary embodiment of the invention formed by the deep drawing mold 500 of Figure 5. It can be seen from Figure 5 and Figure 6 that the shape of the structural member 600 is defined by the shape of the mold 500.

By applying a cold forming technique (such as deep drawing or stretch drawing) stretching by a large percentage of for instance up to 40% or more is possible. It is further possible to form structures with small radii. Also thickness distributions may be adjusted precisely.

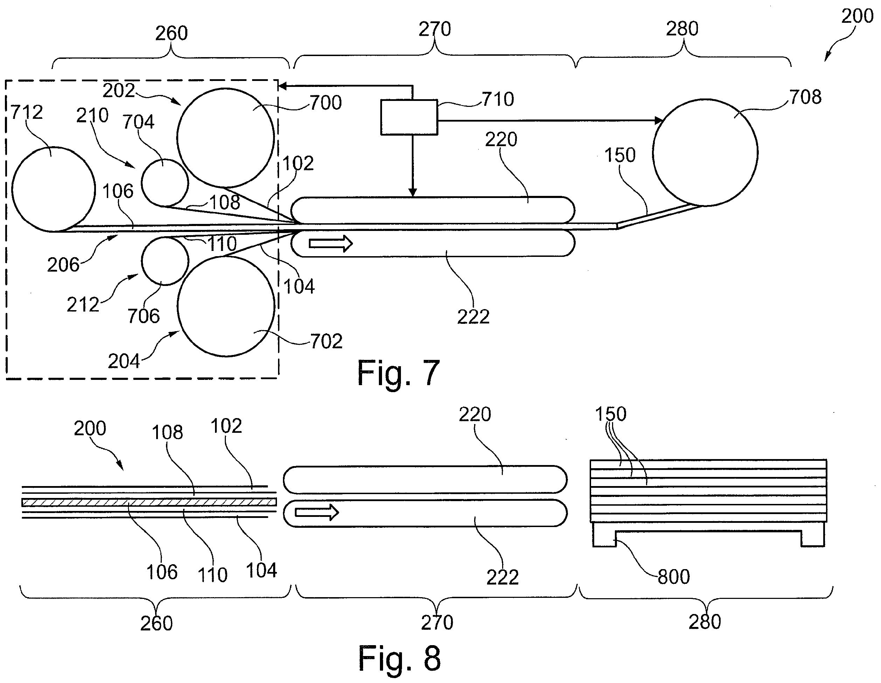

**Figure 7** schematically shows a part 200 of an apparatus for manufacturing structural members 100 according to an exemplary embodiment of the invention.

Also referring to Figure 2, part 200 shown in Figure 7 has a first source roll 700 as the first layer supply unit 202 on which metal sheet material as a basis for the first cover layer 102 is rolled on and may be unrolled for manufacturing the structural members. Correspondingly, part 200 has a second source roll 702 as the second layer supply unit 204 on which metal sheet material as a basis for the second cover layer 104 is rolled on and may be unrolled for manufacturing the structural members. In addition, part 200 has a third source roll 704 as the first adhesive layer supply unit 210 on which a layer of hot melt adhesive as a basis for the first adhesive layer 108 (which may or may not be applied on a support film preventing self-adhering of the hot melt adhesive) is rolled on and may be unrolled for manufacturing the structural members. Moreover, part 200 has a fourth source roll 706 as the second adhesive layer supply unit 212 on which a further layer of hot melt adhesive as a basis for the second adhesive layer 110 (which may or may not be applied on a support film preventing self-adhering of the hot melt adhesive) is rolled on and may be unrolled for manufacturing the structural members.

Beyond this, the embodiment of Figure 7 provides a continuous layer of readily formed plastic foam layer which serves as the core layer 106 and is rolled on and may be unrolled for manufacturing the structural members from a fifth source roll 712. After finishing the manufacture of the planar layer sequence 102, 108, 106, 110, 104 between the heatable rolls 220, 222 the so formed sandwich layer sequence 150 can be rolled on a sixth roll 708 which can be denoted as a destination roll.

This manufacturing procedure can be controlled by a central control unit 710 which may be a microprocessor or a central processing unit (CPU). The control unit 710 may coordinate cooperation of sections 260, 270, 280.

**Figure 8** schematically shows another first part 200 of an apparatus for manufacturing structural members 100 according to exemplary embodiments of the invention.

The embodiment of Figure 8 differs from the embodiment of Figure 7 in that the precursors or semifinished products for forming the sandwich layer sequence 150 are each readily cut layers, as can be taken from the left-hand side of Figure 8. The cover layers 102, 104 are provided as readily cut rectangular metal sheets. The core foam layer 106 is a readily cut rectangular layer which may be cut after unrolling from a source roll and before supply to the heated processing rolls 220, 222. The optional but highly advantageous adhesive layers 108, 110 may be continuous or discontinuous layers of hot melt adhesive cut from a source roll. The so produced pieces of sandwich layer sequence 150 may be stored on top of each other, for instance on a support 800 such as a pallet.

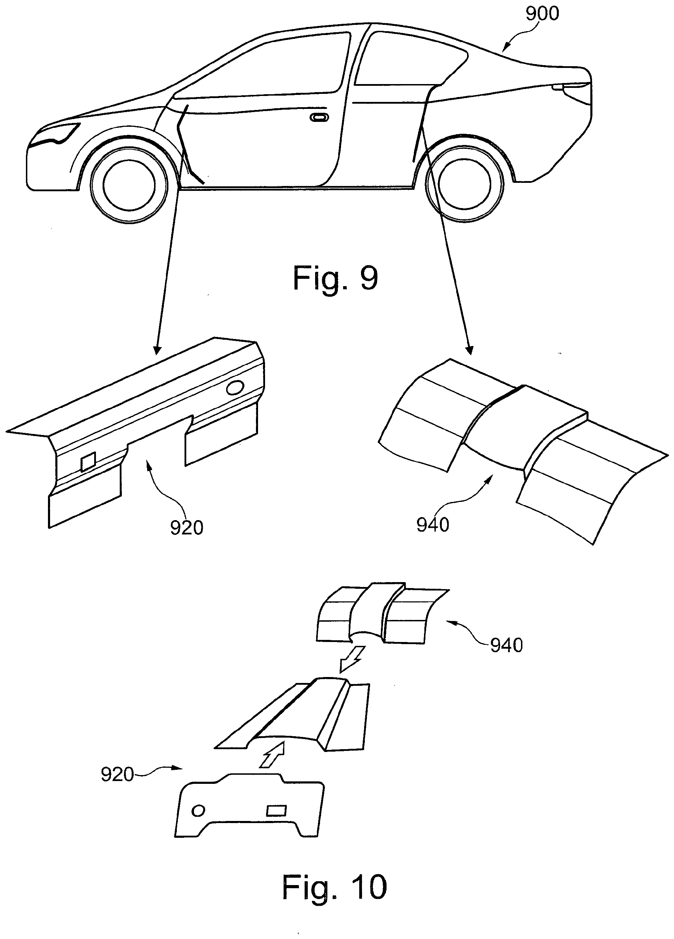

**Figure 9** shows a car 900 as well as two three dimensionally formed structural members 920, 940 thereof manufactured according to exemplary embodiments of the invention. Structural member 920 is a firewall or forefront which, in the present embodiment, has a thickness of 3 mm and a weight of 1.6 kg. Structural member 940 is a rear seatback which has a thickness of 8 mm and a weight of 1.8 kg. **Figure 10** shows different three dimensionally formed structural members which can be produced according to exemplary embodiments of the invention. Among these structural members, firewall 920 and rear seatback 940 can be seen as well.

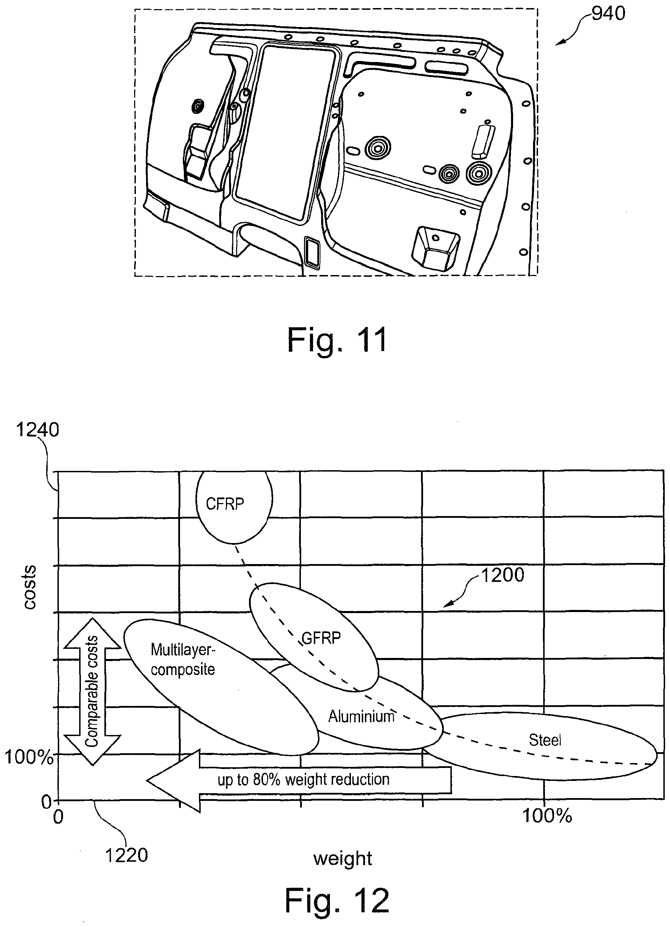

**Figure 11** shows an image of rear panel 940 of an automobile as an example for a three-dimensionally formed structural member according to an exemplary embodiment of the invention. The rear panel 940 is based on aluminum cover layers of a thickness of 1.2 mm. As compared to a conventional construction, rear panel 940 has the same stiffness, the same entire thickness but has a lower weight and can be produced at lower costs. The weight can be reduced by about 30%, and the costs may be reduced by about 25%. The rear panel 940 also meets electric charge protection requirements and fulfills requirements of long-term use.

**Figure 12** shows a diagram 1200 illustrating advantages - in terms of weight (plotted along an abscissa 1220) and manufacturing costs (plotted along an ordinate 1240) - of structural members according to exemplary embodiments as compared to conventional technologies. As can be taken from the diagram 1200, the multi-layer composite architecture according to exemplary embodiments of the invention results in a high stiffness, a low weight, proper damping properties and an economic manufacturability.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. A three-dimensionally formed structural member (100), comprising:
a first cover layer (102) made of a metallic material;
a second cover layer (104) made of a metallic material;
a core layer (106) made of a foam material and being arranged between the first cover layer (102) and the second cover layer (104),
wherein the core layer (106) has a density in a range between 35 kg/m³ and 750 kg/m³;
wherein the structural member (100) is temperature-resistant at a temperature of 180°C,
**characterized in that** the structural member (100) further comprises
an adhesive material (108, 110) adhering the foam material to the first cover layer (102) and/or adhering the foam material to the second cover layer (104);
wherein the adhesive material (108, 110) has a melting point above 180°C.

2. The structural member (100) of claim 1, wherein the core layer (106) consists exclusively of the foam material.

3. The structural member (100) of claim 1 or 2, wherein at least one of the first cover layer (102) and a second cover layer (104) is made of aluminum or steel.

4. The structural member (100) of any of claims 1 to 3, wherein core layer (106) is made of a plastic foam;
in particular comprising one of the following features:
wherein the plastic foam comprises polystyrene or polystyrene blends;
wherein the plastic foam is a thermoplastic polyester particularly polyethylene terephthalate foam;
wherein the plastic foam is polymethacrylimide foam;
wherein the plastic foam is a polyisocyanate based foam, particularly Polyurethane.

5. The structural member (100) of any one of claims 1 to 4, wherein the core layer (106) has a density in a range between 75 kg/m³ and 200 kg/m³.

6. The structural member (100) of any of claims 1 to 5,
in particular comprising at least one of the following features:
wherein the adhesive material (108, 110) is a hot melt glue;
wherein the adhesive material (108, 110) comprises a first adhesive layer (108) between the first cover layer (102) and the core layer (106) and/or comprises a second adhesive layer (110) between the second cover layer (104) and the core layer (106).

7. The structural member (100) of any one of claims 1 to 6, comprising at least one of the following features:
wherein the thickness of the structural member (100) is in a range between 0.2 mm and 10 mm, particularly in a range between 0.5 mm and 8 mm, more particularly in a range between 1 mm and 6 mm;
wherein the thickness of at least one of the first cover layer (102) and the second cover layer (104) is in a range between 0.01 mm and 1.5 mm, particularly in a range between 0.08 mm and 0.8 mm;
wherein the structural member (100) comprises a varnish layer (112), particularly forming a surface layer, on top of at least one of the first cover layer (102) and the second cover layer (104);
wherein at least one of the first cover layer (102) and the second cover layer (104) is a surface layer;
wherein at least one of the first cover layer (102) and the second cover layer (104) is a stiff layer.

8. The structural member (100) of any one of claims 1 to 7, configured as one of the group consisting of an automotive structural member, an aircraft structural member, a rail vehicle structural member, and a ship structural member.

9. An apparatus (200, 300) for producing a three-dimensionally formed structural member (100), the apparatus (200, 300) comprising:
a first layer supply unit (202) having a first source roll (700) on which the first cover layer (102) is rolled on and is unrollable configured for supplying the first cover layer (102) made of a metallic material;
a second layer supply unit (204) having a second source roll (702) on which the second cover layer (104) is rolled on and is unrollable configured for supplying the second cover layer (104) made of a metallic material;
a foam supply unit (206, 208) having a fifth source roll (712) on which a plastic foam layer serving as a core layer (106) is rolled on and being unrollable configured for supplying a material between the first cover layer (102) and the second cover layer (104) which forms the core layer (106) made at least partially of a foam material, wherein the core layer (106) has a density in a range between 35 kg/m³ and 750 kg/m³, and being connected between the first cover layer (102) and the second cover layer (104) to form a cohesive layer sequence (102. 104, 106);
a forming unit (300) configured for three-dimensionally forming the resulting layer sequence (102, 104, 106) to thereby form the structural member (100) from materials being temperature-resistant at a temperature of 180°C;
**characterized in that** the apparatus (200, 300) further comprises an an adhesive material supply unit (210, 212) having a third source roll (704) on which a layer of hot melt adhesive as a basis for a first adhesive layer (108) is rolled on and being unrollable configured for supplying adhesive material (108, 110) between the foam material and the first cover layer (102) and between the foam material and the second cover layer (104) to thereby adhere the foam material to the first cover layer (102) and adhere the foam material to the second cover layer (104);
wherein the adhesive material (108, 110) has a melting point above 180°C.

10. A method of producing a three-dimensionally formed structural member (100), the method comprising:
providing a first cover layer (102) made of a metallic material;
providing a second cover layer (104) made of a metallic material;
arranging a core layer (106) made at least partially of a foam material between the first cover layer (102) and the second cover layer (104) to thereby form a cohesive layer sequence (102, 104, 106),
wherein the core layer (106) has a density in a range between 35 kg/m³ and 750 kg/m³;
three-dimensionally forming the resulting layer sequence (102, 104, 106) to thereby form the structural member (100);
wherein the structural member (100) is formed to be temperature-resistant at a temperature of 180°C;
**characterized in that** the method further comprises
adhering the foam material to the first cover layer (102) and adhering the foam material to the second cover layer (104) by adhesive material (108, 110);
wherein the adhesive material (108, 110) has a melting point above 180°C.

11. The method of claim 10, wherein the forming is performed by cold forming, particularly by deep-drawing the layer sequence (102, 104, 106).

12. The method of claim 10 or 11, wherein the method further comprises pressing the core layer (106), and adhesive material (108, 110), between the first cover layer (102) and the second cover layer (104) by heated pressing bodies (220, 222), particularly rolls;
in particular comprising one of the following features:
wherein the foam material is supplied to the pressing bodies (220, 222) as readily cut solid foam layer;
wherein the foam material is supplied to the pressing bodies (220, 222) as foam precursor material, particularly granulate or powder, which is converted into a foam layer by the heated pressing bodies (220, 222).

13. The method of any of claims 10 to 12, in particular comprising one of the following features:
wherein the adhesive material (108, 110) is supplied to the pressing bodies (220, 222) as readily formed adhesive layer;
wherein the adhesive material (108, 110) is supplied to the pressing bodies (220, 222) as adhesive particles, particularly as adhesive powder or granulate, which are converted into the adhesive layer by the heated pressing bodies (220, 222).

14. The method of any one of claims 12 to 13, wherein the pressing bodies (220, 222) are heated to a temperature (T_{>}) in a range between 100°C and 250°C,
in particular comprising at least one of the following features:
wherein at least one of the first cover layer (102) and the second cover layer (104) is provided by rolling it up from a roll (700, 702);
wherein the method comprises applying a varnish layer (112) on top of at least one of the first cover layer (102) and the second cover layer (104), particularly after the three-dimensionally forming;
wherein the varnish layer (112) is applied at a temperature in the range between 120°C and 250°C, particularly in the range between 170°C and 200°C.

## Patentansprüche

1. Ein dreidimensional geformtes Strukturelement (100), aufweisend:
eine erste Deckschicht (102) aus einem metallischen Material;
eine zweite Deckschicht (104) aus einem metallischen Material;
eine Kernschicht (106) aus einem Schaummaterial und zwischen der ersten Deckschicht (102) und der zweiten Deckschicht (104) angeordnet,
wobei die Kernschicht (106) eine Dichte in einem Bereich zwischen 35 kg/m³ und 750 kg/m³ hat;
wobei das Strukturelement (100) bei einer Temperatur von 180 °C temperaturbeständig ist,
**dadurch gekennzeichnet, dass** das Strukturelement (100) ferner aufweist
ein haftfähiges Material (108, 110), welches das Schaumaterial an die erste Deckschicht (102) klebt und/oder das Schaumaterial an die zweite Deckschicht (104) klebt;
wobei das haftfähige Material (108, 110) einen Schmelzpunkt über 180 °C hat.

2. Das Strukturelement (100) gemäß Anspruch 1, wobei die Kernschicht (106) ausschließlich aus dem Schaumaterial besteht.

3. Das Strukturelement (100) gemäß Anspruch 1 oder 2, wobei mindestens eine der ersten Deckschicht (102) und einer zweiten Deckschicht (104) aus Aluminium oder Stahl ist.

4. Das Strukturelement (100) gemäß einem beliebigen der Ansprüche 1 bis 3, wobei die Kernschicht (106) aus einem Kunststoffschaum ist;
insbesondere aufweisend eines der folgenden Merkmale:
wobei der Kunststoffschaum Polystyrol oder Polystyrol-Mischungen aufweist;
wobei der Kunststoffschaum ein thermoplastisches Polyester ist, insbesondere Polyethylenterephthalat-Schaum;
wobei der Kunststoffschaum ein Polymethacrylimid-Schaum ist;
wobei der Kunststoffschaum ein Polyisocyanat-basiert Schaum ist, insbesondere Polyurethan.

5. Das Strukturelement (100) gemäß einem beliebigen der Ansprüche 1 bis 4, wobei die Kernschicht (106) eine Dichte in einem Bereich zwischen 75 kg/m³ und 200 kg/m³ hat.

6. Das Strukturelement (100) gemäß einem beliebigen der Ansprüche 1 bis 5,
insbesondere aufweisend mindestens eines der folgenden Merkmale:
wobei das haftfähige Material (108, 110) ein Heißschmelzkleber ist;
wobei das haftfähige Material (108, 110) eine erste haftfähige Schicht (108) zwischen der ersten Deckschicht (102) und der Kernschicht (106) aufweist und/oder eine zweite haftfähige Schicht (110) zwischen der zweiten Deckschicht (104) und der Kernschicht (106) aufweist.

7. Das Strukturelement (100) gemäß einem beliebigen der Ansprüche 1 bis 6, aufweisend mindestens eines der folgenden Merkmale:
wobei die Dicke des Strukturelements (100) in einem Bereich zwischen 0,2 mm und 10 mm ist, insbesondere in einem Bereich zwischen 0,5 mm und 8 mm, weiter insbesondere in einem Bereich zwischen 1 mm und 6 mm;
wobei die Dicke von mindestens einer der ersten Deckschicht (102) und der zweiten Deckschicht (104) in einem Bereich zwischen 0,01 mm und 1,5 mm ist, insbesondere in einem Bereich zwischen 0,08 mm und 0,8 mm;
wobei das Strukturelement (100) eine Lackschicht (112) aufweist, welche insbesondere eine Oberflächenschicht bildet, oben auf mindestens einer der ersten Deckschicht (102) und der zweiten Deckschicht (104);
wobei mindestens eine der ersten Deckschicht (102) und der zweiten Deckschicht (104) eine Oberflächenschicht ist;
wobei mindestens eine der ersten Deckschicht (102) und der zweiten Deckschicht (104) eine steife Schicht ist.

8. Das Strukturelement (100) gemäß einem beliebigen der Ansprüche 1 bis 7, konfiguriert als eines aus der Gruppe, bestehend aus einem Automobil-Strukturelement, einem Luftfahrzeug-Strukturelement, einem Schienenfahrzeug-Strukturelement, und einem Schiff-Strukturelement.

9. Eine Vorrichtung (200, 300) zum Erzeugen eines dreidimensional geformten Strukturelements (100), wobei die Vorrichtung (200, 300) aufweist:
eine erste Schichtzuführungseinheit (202), welche eine erste Quellenrolle (700) hat, auf welcher die erste Deckschicht (102) aufgerollt ist und abrollbar ist, welche zum Zuführen der ersten Deckschicht (102) aus einem metallischen Material konfiguriert ist;
eine zweite Schichtzuführungseinheit (204), welche eine zweite Quellenrolle (702) hat, auf welcher die zweite Deckschicht (104) aufgerollt ist und abrollbar ist, welche zum Zuführen der zweiten Deckschicht (104) aus einem metallischen Material konfiguriert ist;
eine Schaumzuführungseinheit (206, 208), welche eine fünfte Quellenrolle (712) hat, auf welcher eine Kunststoffschaumschicht, welche als eine Kernschicht (106) dient, aufgerollt ist und abrollbar ist, welche zum Zuführen eines Materials zwischen die erste Deckschicht (102) und die zweite Deckschicht (104) konfiguriert ist, welches die Kernschicht (106) bildet, welche zumindest teilweise aus einem Schaumaterial ist, wobei die Kernschicht (106) eine Dichte in einem Bereich zwischen 35 kg/m³ und 750 kg/m³ hat, und welche zwischen der ersten Deckschicht (102) und der zweiten Deckschicht (104) verbunden ist, so dass eine kohäsive Schichtsequenz (102, 104, 106) gebildet ist;
eine Formgebungseinheit (300), welche zum dreidimensionalen Formen der resultierenden Schichtsequenz (102, 104, 106) konfiguriert ist, um dadurch das Strukturelement (100) aus Materialien zu bilden, welche bei einer Temperatur von 180 °C temperaturbeständig sind;
**dadurch gekennzeichnet, dass** die Vorrichtung (200, 300) ferner aufweist
eine Haftmaterial-Zuführungseinheit (210, 212), welche eine dritte Quellenrolle (704) hat, auf welcher eine Schicht aus Heißschmelzkleber als eine Basis für eine erste Haftschicht (108) aufgerollt ist und abrollbar ist, welche zum Zuführen eines haftfähigen Materials (108, 110) zwischen das Schaumaterial und die erste Deckschicht (102) und zwischen das Schaumaterial und die zweite Deckschicht (104) konfiguriert ist, um dadurch das Schaumaterial an die erste Deckschicht (102) zu kleben, und das Schaumaterial an die zweite Deckschicht (104) zu kleben;
wobei das haftfähige Material (108, 110) einen Schmelzpunkt über 180 °C hat.

10. Ein Verfahren zum Erzeugen eines dreidimensional geformten Strukturelements (100), wobei das Verfahren aufweist:
Bereitstellen einer ersten Deckschicht (102) aus einem metallischen Material;
Bereitstellen einer zweiten Deckschicht (104) aus einem metallischen Material;
Anordnen einer Kernschicht (106), welche zumindest teilweise aus einem Schaumaterial ist, zwischen der ersten Deckschicht (102) und der zweiten Deckschicht (104), um dadurch eine kohäsive Schichtsequenz (102, 104, 106) zu bilden,
wobei die Kernschicht (106) eine Dichte in einem Bereich zwischen 35 kg/m³ und 750 kg/m³ hat;
dreidimensionales Formen der resultierenden Schichtsequenz (102, 104, 106), um dadurch das Strukturelement (100) zu bilden;
wobei das Strukturelement (100) so gebildet ist, dass es bei einer Temperatur von 180 °C temperaturbeständig ist;
**dadurch gekennzeichnet, dass** das Verfahren ferner aufweist
Kleben des Schaumaterials an die erste Deckschicht (102), und Kleben des Schaumaterials an die zweite Deckschicht (104), mittels eines haftfähigen Materials (108, 110);
wobei das haftfähige Material (108, 110) einen Schmelzpunkt über 180 °C hat.

11. Das Verfahren gemäß Anspruch 10, wobei das Bilden mittels Kaltformens ausgeführt wird, insbesondere mittels Tiefziehens der Schichtsequenz (102, 104, 106).

12. Das Verfahren gemäß Anspruch 10 oder 11, wobei das Verfahren ferner aufweist
Pressen der Kernschicht (106) und des haftfähigen Materials (108, 110) zwischen die erste Deckschicht (102) und die zweite Deckschicht (104) mittels erwärmter Presskörper (220, 222), insbesondere Rollen;
insbesondere aufweisend eines der folgenden Merkmale:
wobei das Schaumaterial den Presskörpern (220, 222) als eine fertig geschnittene feste Schaumschicht zugeführt wird;
wobei das Schaumaterial den Presskörpern (220, 222) als ein Schaumvorstufenmaterial zugeführt wird, insbesondere ein Granulat oder Pulver, welches mittels der erwärmten Presskörper (220, 222) zu einer Schaumschicht umgewandelt wird.

13. Das Verfahren gemäß einem beliebigen der Ansprüche 10 bis 12, insbesondere aufweisend eines der folgenden Merkmale:
wobei das haftfähige Material (108, 110) den Presskörpern (220, 222) als eine fertig geformte haftfähige Schicht zugeführt wird;
wobei das haftfähige Material (108, 110) den Presskörpern (220, 222) als haftfähige Partikel zugeführt wird, insbesondere als ein haftfähiges Pulver oder Granulat, welche mittels der erwärmten Presskörper (220, 222) zu der Haftschicht umgewandelt werden.

14. Das Verfahren gemäß einem beliebigen der Ansprüche 12 bis 13, wobei die Presskörper (220, 222) zu einer Temperatur (T>) in einem Bereich zwischen 100 °C und 250 °C erwärmt werden,
insbesondere aufweisend mindestens eines der folgenden Merkmale:
wobei mindestens eine der ersten Deckschicht (102) und der zweiten Deckschicht (104) mittels Abrollens von einer Rolle (700, 702) bereitgestellt wird;
wobei das Verfahren aufweist
Aufbringen einer Lackschicht (112) oben auf mindestens eine der ersten Deckschicht (102) und der zweiten Deckschicht (104), insbesondere nach dem dreidimensionalen Formen;
wobei die Lackschicht (112) bei einer Temperatur in dem Bereich zwischen 120 °C und 250 °C aufgebracht wird, insbesondere in dem Bereich zwischen 170 °C und 200 °C.

## Revendications

1. Élément structurel formé de manière tridimensionnelle (100) comprenant :
une première couche de revêtement (102) réalisée en un matériau métallique ;
une seconde couche de revêtement (104) réalisée en un matériau métallique ;
une couche de noyau (106) constituée d'un matériau de mousse et agencée entre la première couche de revêtement (102) et la seconde couche de revêtement (104),
dans lequel la couche de noyau (106) présente une densité dans une plage allant de 35 kg/m³ à 750 kg/m³ ;
dans lequel l'élément structurel (100) est thermorésistant à une température de 180°C,
**caractérisé en ce que** l'élément structurel (100) comprend en outre
un matériau adhésif (108, 110) mettre en adhérence le matériau de mousse sur la première couche de revêtement (102) et/ou mettre en adhérence le matériau de mousse sur la seconde couche de revêtement (104) ;
dans lequel le matériau adhésif (108, 110) présente un point de fusion supérieur à 180°C.

2. Élément structurel (100) selon la revendication 1, dans lequel la couche de noyau (106) est constituée exclusivement du matériau de mousse.

3. Élément structurel (100) selon la revendication 1 ou 2, dans lequel au moins l'une de la première couche de revêtement (102) et de la seconde couche de revêtement (104) est réalisée en aluminium ou acier.

4. Élément structurel (100) selon l'une quelconque des revendications 1 à 3, dans lequel la couche de noyau (106) est constituée d'une mousse de plastique ;
comprenant notamment l'une des caractéristiques suivantes :
dans lequel la mousse de plastique comprend du polystyrène ou des mélanges de polystyrène ;
dans lequel la mousse de plastique est une mousse de polyester thermoplastique, en particulier de polyéthylène téréphtalate ;
dans lequel la mousse de plastique est une mousse de polyméthacrylimide ;
dans lequel la mousse de plastique étant une mousse à base de polyisocyanate, en particulier de polyuréthane.

5. Élément structurel (100) selon l'une quelconque des revendications 1 à 4, dans lequel la couche de noyau (106) présente une densité dans une plage allant de 75 kg/m³ à 200 kg/m³.

6. Élément structurel (100) selon l'une quelconque des revendications 1 à 5,
comprenant en particulier au moins l'une des caractéristiques suivantes :
dans lequel le matériau adhésif (108, 110) est une colle thermofusible ;
dans lequel le matériau adhésif (108, 110) comprend une première couche adhésive (108) entre la première couche de revêtement (102) et la couche de noyau (106) et/ou comprend une seconde couche adhésive (110) entre la seconde couche de revêtement (104) et la couche de noyau (106).

7. Élément structurel (100) selon l'une quelconque des revendications 1 à 6, comprenant au moins l'une des caractéristiques suivantes :
dans lequel l'épaisseur de l'élément structurel (100) est dans une plage allant de 0,2 mm à 10 mm, en particulier dans une plage allant de 0,5 mm à 8 mm, plus particulièrement dans une plage allant de 1 mm à 6 mm ;
dans lequel l'épaisseur d'au moins l'une de la première couche de revêtement (102) et de la seconde couche de revêtement (104) est dans une plage allant de 0,01 mm à 1,5 mm, en particulier dans une plage allant de 0,08 mm à 0,8 mm ;
dans lequel l'élément structurel (100) comprend une couche de vernis (112), formant en particulier une couche de surface, sur le dessus d'au moins l'une parmi la première couche de revêtement (102) et la seconde couche de revêtement (104) ;
dans lequel au moins l'une de la première couche de revêtement (102) et de la seconde couche de revêtement (104) est une couche de surface ;
dans lequel au moins l'une de la première couche de revêtement (102) et de la seconde couche de revêtement (104) est une couche rigide.

8. Élément structurel (100) selon l'une quelconque des revendications 1 à 7, configuré sous la forme de l'un du groupe constitué d'un élément structurel d'automobile, d'un élément structurel d'aéronef, d'un élément structurel de véhicule ferroviaire et d'un élément structurel de navire.

9. Appareil (200, 300) pour produire un élément structurel formé de manière tridimensionnelle (100), l'appareil (200, 300) comprenant :
une unité d'alimentation de première couche (202) présentant un premier rouleau source (700) sur lequel la première couche de revêtement (102) est enroulée et peut être déroulée, configurée pour alimenter la première couche de revêtement (102) réalisée en un matériau métallique ;
une unité d'alimentation de seconde couche (204) présentant un deuxième rouleau source (702) sur lequel la seconde couche de revêtement (104) est enroulée et peut être déroulée, configurée pour alimenter la seconde couche de revêtement (104) réalisée en un matériau métallique ;
une unité d'alimentation de mousse (206, 208) présentant un cinquième rouleau source (712) sur lequel une couche de mousse de plastique servant de couche de noyau (106) est enroulée et peut être déroulée, configurée pour alimenter un matériau entre la première couche de revêtement (102) et la seconde couche de revêtement (104) qui forme la couche de noyau (106) réalisée au moins partiellement en un matériau de mousse, dans lequel la couche de noyau (106) présente une densité dans une plage allant de 35 kg/m³ à 750 kg/m³, et étant reliée entre la première couche de revêtement (102) et la seconde couche de revêtement (104) pour former une séquence de couches solidaires (102, 104, 106) ;
une unité de formation (300) configurée pour former de manière tridimensionnelle la séquence de couches résultante (102, 104, 106) pour former ainsi l'élément structurel (100) à partir de matériaux thermorésistants à une température de 180°C ;
**caractérisé en ce que** l'appareil (200, 300) comprend en outre
une unité d'alimentation de matériau adhésif (210, 212) présentant un troisième rouleau source (704) sur lequel une couche d'adhésif thermofusible servant de base pour une première couche d'adhésif (108) est enroulée et peut être déroulée, configurée pour fournir un matériau adhésif (108, 110) entre le matériau de mousse et la première couche de revêtement (102) et entre le matériau de mousse et la seconde couche de revêtement (104) pour ainsi mettre en adhérence le matériau de mousse sur la première couche de revêtement (102) et mettre en adhérence le matériau de mousse sur la seconde couche de revêtement (104) ;
dans lequel le matériau adhésif (108, 110) présente un point de fusion supérieur à 180°C.

10. Procédé de production d'un élément structurel formé de manière tridimensionnelle (100), le procédé comprenant les étapes consistant à :
fournir une première couche de revêtement (102) réalisée en un matériau métallique ;
fournir une seconde couche de revêtement (104) réalisée en un matériau métallique ;
agencer une couche de noyau (106) réalisée au moins partiellement en un matériau de mousse entre la première couche de revêtement (102) et la seconde couche de revêtement (104) pour former ainsi une séquence de couches solidaires (102, 104, 106),
dans lequel la couche de noyau (106) présente une densité dans une plage allant de 35 kg/m³ à 750 kg/m³ ;
former de manière tridimensionnelle la séquence de couches résultante (102, 104, 106) pour former ainsi l'élément structurel (100) ;
dans lequel l'élément structurel (100) est formé pour être thermorésistant à une température de 180°C ;
**caractérisé en ce que** le procédé comprend en outre l'étape consistant à
mettre en adhérence le matériau de mousse sur la première couche de revêtement (102) et mettre en adhérence le matériau de mousse sur la seconde couche de revêtement (104) par l'intermédiaire d'un matériau adhésif (108, 110) ;
dans lequel le matériau adhésif (108, 110) présente un point de fusion supérieur à 180°C.

11. Procédé selon la revendication 10, dans lequel le formage est effectué par formage à froid, en particulier par emboutissage profond de la séquence de couches (102, 104, 106).

12. Procédé selon la revendication 10 ou 11, dans lequel le procédé comprend en outre le pressage de la couche de noyau (106), et du matériau adhésif (108, 110), entre la première couche de revêtement (102) et la seconde couche de revêtement (104) par l'intermédiaire de corps de pressage chauffés (220, 222), en particulier des rouleaux ;
comprenant notamment l'une des caractéristiques suivantes :
dans lequel le matériau de mousse est fourni aux corps de pressage (220, 222) sous la forme d'une couche de mousse solide facilement découpée ;
dans lequel le matériau de mousse est fourni aux corps de pressage (220, 222) sous la forme d'un matériau précurseur de mousse, en particulier de matière particulaire ou de poudre, qui est converti en une couche de mousse par les corps de pressage chauffés (220, 222).

13. Procédé selon l'une quelconque des revendications 10 à 12, comprenant en particulier l'une des caractéristiques suivantes :
dans lequel le matériau adhésif (108, 110) est fourni aux corps de pressage (220, 222) sous la forme d'une couche d'adhésif facilement formée ;
dans lequel le matériau adhésif (108, 110) est fourni aux corps de pressage (220, 222) sous la forme de particules d'adhésif, en particulier sous la forme de poudre ou de matière particulaire adhésive, qui sont converties en la couche d'adhésif par les corps de pressage chauffés (220, 222).

14. Procédé selon l'une quelconque des revendications 12 à 13, dans lequel les corps de pressage (220, 222) sont chauffés jusqu'à une température (T>) dans une plage allant de 100°C à 250°C,
comprenant en particulier au moins l'une des caractéristiques suivantes :
dans lequel au moins l'une de la première couche de revêtement (102) et de la seconde couche de revêtement (104) est fournie en l'enroulant à partir d'un rouleau (700, 702) ;
dans lequel le procédé comprend l'application d'une couche de vernis (112) sur le dessus d'au moins l'une de la première couche de revêtement (102) et de la seconde couche de revêtement (104), en particulier après le formage de manière tridimensionnelle ;
dans lequel la couche de vernis (112) est appliquée à une température dans la plage allant de 120°C à 250°C, en particulier dans la plage allant de 170°C à 200°C.
